# EUROPÄISCHE PATENTSCHRIFT

(11) **EP 4 175 962 B1**
(45) Veröffentlichungstag und Bekanntmachung des Hinweises auf die Patenterteilung: **18.10.2023**
(21) Anmeldenummer: 20793675.8
(22) Anmeldetag: 20.10.2020
(51) Int. Cl.: C07F 7/18

(54) **VERFAHREN ZUR HERSTELLUNG ALKOXYGRUPPEN HALTIGER AMINOSILOXANE**
PROCESS FOR SYNTHESIZING ALKOXY GROUP-CONTAINING AMINOSILOXANES
PROCÉDÉ DE SYNTHÈSE D'AMINOSILOXANES CONTENANT DES GROUPES ALCOXY

(43) Veröffentlichungstag der Anmeldung: 10.05.2023
(73) Patentinhaber: Wacker Chemie AG, 81737 München (DE)
(72) Erfinder: WIENKENHÖVER, Niklas, 81545 München (DE); WEIDNER, Richard, 84489 Burghausen (DE)
(74) Vertreter: Fritz, Helmut
(86) Internationale Anmeldenummer: PCT/EP2020/079492
(87) Internationale Veröffentlichungsnummer: WO 2022/083851

(56) Entgegenhaltungen:
- CN-A- 104 231 274
- US-A- 3 890 269

## Beschreibung

Die Erfindung betrifft Verfahren zur Erzeugung alkoxyreicher Aminosiloxane durch Äquilibrierung von alkoxyreichen Teilhydrolysaten mit monomeren Aminoalkoxysilanen. Alkoxygruppen-reiche Aminosiloxane werden bisher ausgehend von den monomeren Methylalkoxysilanen und den monomeren Aminoalkoxysilanen durch basen- bzw. säurenkatalysierte Cohydrolyse erzeugt. Hier besteht durch die Präsenz der basischen Aminofunktionalitäten während der Hydrolyse prinzipiell die Gefahr der Feststoffbildung oder sogar der Gelierung auf Grund der Beschleunigung der Kondensationsreaktionen von Silanolgruppen bei erhöhten pH-Werten. Darüber hinaus werden Lösungsmittelzusätze notwendig um die exotherme Hydrolysereaktion kontrollierbar zu machen - diese Zusätze reduzieren allerdings wesentlich die Raum-Zeit-Ausbeute der Produktsynthese.

US9962327 B2 beschreibt eine flüssige Formulierung, enthaltend das Produkt aus der Cohydrolyse von 3-Aminopropyltriethoxysilan und Methyltriethoxysilan. EP1580215 A1 beschreibt die Herstellung von aminofunktionellen Organopolysiloxanen durch Umsetzung von Aminosilanen mit linearen Siloxanen und basischen Katalysatoren. CN104231274A offenbart ein Verfahren zur Herstellung von Aminosiloxanen.

Gegenstand der Erfindung ist ein Verfahren zur Herstellung von Aminosiloxanen, bei dem ein
alkoxyreiches Teilhydrolysat von Silanen, die unabhängig ausgewählt werden aus den allgemeinen Formeln I, Ia, Ib und II

[R¹₃Si(OR²)] (Ia),

[R¹₂Si(OR²)₂] (Ib),

[Si (OR²)₄] (I)

und

[R¹Si(OR²)₃] (II)

mit einem oder mehreren Aminosilanen, die unabhängig ausgewählt werden aus den allgemeinen Formeln IIIa bis Va oder einem Teilhydrolysat davon

[R^{3a}Si(OR⁴)₃] (IIIa),

[R^{3a}₂Si(OR⁴)₂] (IVa)

und

[R^{3a}₃Si(OR⁴)] (Va)

in Gegenwart von
basischem Katalysator umgesetzt wird,
wobei
   R¹ einen einwertigen, unsubstituierten oder mit Halogenatomen substituierten C₁-C₂₀-Kohlenwasserstoffrest bedeutet,
   R² und R⁴ gleich oder verschieden sein können und ein Wasserstoffatom oder unsubstituierten oder mit Halogenatomen substituierten C₁-C₂₀-Kohlenwasserstoffrest bedeuten,
   R^{3a} einen einwertigen C₁-C₂₀-Kohlenwasserstoffrest enthaltend einen oder mehrere basische Stickstoffatome oder einen einwertigen, unsubstituierten oder mit Halogenatomen substituierten C₁-C₂₀-Kohlenwasserstoffrest bedeutet.

Gegenstand der Erfindung ist auch ein Verfahren zur Herstellung von Aminosiloxanen, bei dem
alkoxyreiches Teilhydrolysat von Silanen, die unabhängig ausgewählt werden aus den allgemeinen Formeln I und II

[Si(OR²)₄] (I)

und

[R¹Si(OR²)₃] (II)

mit einem oder mehreren Aminosilanen, die unabhängig ausgewählt werden aus den allgemeinen Formeln III bis V

[R³Si(OR⁴)₃] (III),

[R³₂Si(OR⁴)₂] (IV)

und

[R³₃Si(OR⁴)] (V)

in Gegenwart von
basischem Katalysator umgesetzt wird,
wobei
   R¹ einen einwertigen, unsubstituierten oder mit Halogenatomen substituierten C₁-C₂₀-Kohlenwasserstoffrest bedeutet,
   R² und R⁴ gleich oder verschieden sein können und ein Wasserstoffatom oder unsubstituierten oder mit Halogenatomen substituierten C₁-C₂₀-Kohlenwasserstoffrest bedeuten,
   R³ einen einwertigen C₁-C₂₀-Kohlenwasserstoffrest enthaltend einen oder mehrere basische Stickstoffatome bedeutet.

Bei dem Verfahren werden die Hydrolyse der Silane (Kondensationsreaktion) und der Amineinbau über die Aminosilane voneinander separiert. Die Silane werden dabei durch Hydrolyse zunächst in Teilhydrolysate überführt. Teilhydrolysate im Rahmen dieser Erfindung sind Produkte aus der Umsetzung von Silanen oder Silangemischen der allgemeinen Formeln I, Ia, Ib, II, III bis V und IIIa bis Va mit Wasser, bei der eine substöchiometrische Menge an Wasser umgesetzt wird, relativ zu der für die vollständige Hydrolyse aller Alkoxyfunktionalitäten benötigten Stoffmenge und enthalten als solche noch Alkoxyfunktionalitäten. Für die Hydrolyse von einem Mol Alkoxygruppen OR² oder OR⁴ werden 0,5 Mol Wasser benötigt. Der Einbau der Aminofunktionalitäten erfolgt durch eine Basen-katalysierte Äquilibrierung zwischen den Teilhydrolysaten und einem monomeren Aminoalkoxysilan. Der mittlere Kondensationsgrad des Gemisches aus Teilhydrolysat und Aminoalkoxysilan bleibt nach der Äquilibrierung unverändert.

Im Verfahren sind keine Lösungsmittelzusätze notwendig, die häufig notwendig sind, um basische Cohydrolysen zu kontrollieren. Durch das so eingesparte Volumen können höhere Raum-Zeit-Ausbeuten realisiert werden. Gewünschte Lösungsmittel für die Endapplikation können dann anschließend zugesetzt werden.

Da in diesem Verfahren keine Wasserzugabe notwendig ist, kann die Gelierung ausgeschlossen und die Raum-Zeit-Ausbeute deutlich erhöht werden.

Beim Verfahren von EP1580215 A1 wird der basische Katalysator verwendet, um OH-Funktionalitäten (HO-PDMS-OH und HO-Glykol bzw. HO-Ethylhexan) zu verknüpfen, dabei wird Wasser freigesetzt. Es werden dort zunächst Endfunktionalitäten verknüpft. Im erfindungsgemäßen Verfahren hingegen werden Bindungen im Teilhydrolysat und dem Aminoalkoxysilan durch die Äquilibrierung gebrochen und neu aufgebaut, ohne dabei den mittleren Kondensationsgrad zu verändern. In diesem sehr schnellen und nicht-exothermen Prozess findet der Einbau des Aminosilans bevorzugt statt. Dies erkennt man insbesondere an der Bildung des Methyltrialkoxysilans und dem weiter fortschreitenden Einbau des Aminosilans (ausgedrückt durch den Äquilibrierungszustand) in den Beispielen. Dies ist auf Grund des höheren sterischen Anspruchs von der Trialkoxysilane und der Verzweigungen im Harz überraschend.

Beispiele für Kohlenwasserstoffreste R¹, R² oder R⁴ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Die Kohlenwasserstoffreste R¹ enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste R¹ mit aliphatischer Doppelbindung sind der Vinyl-, Allyl-, und 5-Hexen-1-ylrest. Vorzugsweise enthalten jedoch höchstens 1% der Kohlenwasserstoffreste R¹, insbesondere keine, eine Doppelbindung.

Beispiele für mit Halogenatomen substituierte R¹, R² oder R⁴ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, mund p-Chlorphenylrest.

Bevorzugt handelt es sich bei den Resten R¹, R² oder R⁴ um einen gesättigten Kohlenwasserstoffrest mit 1 bis 10, besonders bevorzugt mit 1 bis 6 Kohlenstoffatomen.

Bevorzugt handelt es sich bei dem Rest R¹ um Methyl-, Ethyl-, n-Propyl-, iso-Propyl- oder Phenylreste besonders bevorzugt sind Methyl- oder Phenylrest, insbesondere Methylrest.

Bevorzugt handelt es sich bei dem Rest R² um Methyl- oder Ethylrest.

Vorzugsweise ist R³ in den allgemeinen Formeln III bis V ein Rest der allgemeinen Formel VI

-R⁵-[NR⁶-R⁷-]_{g}NR⁸₂ (VI)

wobei R⁵ ein zweiwertiger linearer oder verzweigter Kohlenwasserstoffrest mit 1 bis 18 Kohlenstoffatomen bedeutet,
R⁶ und R⁸ die Bedeutung von R¹ und Wasserstoff haben, vorzugsweise ein Wasserstoffatom sind,
R⁷ ein zweiwertiger Kohlenwasserstoffrest mit 1 bis 6 Kohlenstoffatomen und
g 0, 1, 2, 3 oder 4, vorzugsweise 0 oder 1 ist.

Bevorzugte Beispiele für Reste R³ sind:
Morpholino-(CH₂)-
H₂N(CH₂)₂NH(CH₂)CH(CH₃)CH₂-
(Cyclohexyl)NH(CH₂)₃-
(Cyclohexyl)NH(CH₂)-
CH₃NH(CH₂)₃-
(CH₃)₂N(CH₂)₃-
CH₃CH₂NH(CH₂)₃-
(CH₃CH₂)₂N(CH₂)₃-
CH₃NH(CH₂)₂NH(CH₂)₃-
(CH₃)₂N(CH₂)NH(CH₂)₃-
CH₃CH₂NH(CH₂)₂NH(CH₂)₃-
(CH₃CH₂)₂N(CH₂)₂NH(CH₂)₃-, insbesondere
H₂N(CH₂)₃-
H₂N(CH₂)₂NH(CH₂)₃-.

Beispiele für Aminoalkylsilane sind
(3-Aminopropyl)dimethoxymethylsilan,
(3-Aminopropyl)diethoxymethylsilan,
(3-Aminopropyl)trimethoxysilan,
(3-Aminopropyl)triethoxysilan,
N-Morpholinomethyltrimethoxysilan,
N-Morpholinomethyltriethoxysilan,
Cyclohexylaminomethyltrimethoxysilan,
Cyclohexalaminomethyltriethoxysilan,
[N-(2-Aminoethyl)-3-aminopropyl]dimethoxymethylsilan,
[N-(2-Aminoethyl)-3-aminopropyl]diethoxymethylsilan,
[N-(2-Aminoethyl)-3-aminopropyl]trimethoxysilan,
[N-(2-Aminoethyl)-3-aminopropyl]triethoxysilan,
(Aminomethyl)dimethoxymethylsilan,
(Aminomethyl)diethoxymethylsilan,
(Aminomethyl)trimethoxysilan,
(Aminomethyl)triethoxysilan.
Besonders bevorzugt sind
[N-(2-Aminoethyl)-3-aminopropyl]dimethoxymethylsilan,
[N-(2-Aminoethyl)-3-aminopropyl]diethoxymethylsilan,
[N-(2-Aminoethyl)-3-aminopropyl]trimethoxysilan, [N-(2-Aminoethyl)-3-aminopropyl]triethoxysilan, (3-Aminopropyl)dimethoxymethylsilan, (3-Aminopropyl)diethoxymethylsilan, (3-Aminopropyl)trimethoxysilan und (3-Aminopropyl)triethoxysilan, sowie deren cyclische oder lineare Teilhydrolysate.

Beispiele und bevorzugte Beispiele für Reste R^{3a} sind für Reste R¹ und R³ aufgeführt.

Das alkoxyreiche Teilhydrolysat von Silanen, die ausgewählt werden aus den allgemeinen Formeln I, Ia, Ib und II, insbesondere I und II, wird vorzugsweise hergestellt durch Hydrolyse der Silane, die ausgewählt werden aus den allgemeinen Formeln I, Ia, Ib und II, insbesondere I und II. Die Hydrolyse kann durch Säuren, vorzugsweise Mineralsäuren, wie Salzsäure, Phosphorsäure oder Schwefelsäure katalysiert werden.

Das alkoxyreiche Teilhydrolysat weist vorzugsweise 0,1 bis 2, besonders bevorzugt 0,3 bis 1,7, insbesondere 0,5 bis 1,5 Alkoxygruppen pro Siliciumatom auf.

In einer bevorzugten Ausführungsform wird das alkoxyreiche Teilhydrolysat aus mindestens 70 Gew.-%, besonders bevorzugt mindestens 90 Gew.-%, insbesondere mindestens 95 Gew.-% Silan der allgemeinen Formel II hergestellt. Das restliche Silan ist dabei Silan der allgemeinen Formel I.

Es kann eine Art von Teilhydrolysat oder mehrere Arten von Teilhydrolysaten eingesetzt werden.

Die Teilhydrolysate weisen eine Viskosität von vorzugsweise 10 bis 3000 mPa*s bei 25°C, bevorzugt 30 bis 2000 mPa*s bei 25°C auf.

Die Teilhydrolysate weisen eine Molmasse Mₙ nach GPC von vorzugsweise 100 bis 2000 g/mol, bevorzugt 200 bis 1500 g/mol auf.

Ein käuflich erwerbliches Teilhydrolysat ist SILRES^{®} MSE 100 von WACKER CHEMIE AG, Deutschland.

Bei dem erfindungsgemäßen Verfahren werden auf 100 Gewichtsteile Teilhydrolysat vorzugsweise 10 bis 200 Gewichtsteile, besonders bevorzugt 20 bis 150, insbesondere 30 bis 120 Gewichtsteile Aminosilan eingesetzt.

Vorzugsweise wird die Reaktion so lange durchgeführt, dass sich die Zusammensetzung bei den Reaktionsbedingungen nicht mehr ändert.

Die basischen Katalysatoren werden bevorzugt ausgewählt aus Alkali- und Erdalkalihydroxiden, Alkoholaten und Siloxanolaten Bevorzugt sind die Alkalialkoholate.

Bevorzugte Beispiele für die bei dem erfindungsgemäßen Verfahren eingesetzten Alkalihydroxide sind Kaliumhydroxid und Natriumhydroxid, wobei Kaliumhydroxid bevorzugt ist.

Bevorzugte Beispiele für die bei dem erfindungsgemäßen Verfahren eingesetzten Alkalialkoholate sind Natriummethanolat, Natriumethanolat, Kaliummethylat und Kaliumethylat.

Bevorzugte Beispiele für die bei dem erfindungsgemäßen Verfahren eingesetzten Alkalisiloxanolate sind Natriumsiloxanolate.

Bei dem erfindungsgemäßen Verfahren werden bezogen auf das Teilhydrolysat vorzugsweise 0,1 bis 800 Gew.-ppm, besonders bevorzugt 10 bis 650 Gew.-ppm und insbesondere bevorzugt 50 - 400 Gew.-ppm basischer Katalysator zugesetzt.

Bei einem Einsatz von Alkalialkoholaten, insbesondere NaOMe oder KOMe wird der finale Äquilibrierungszustand, das thermodynamische Gleichgewicht, schnell eingestellt. Die Materialzusammensetzung ändert sich über die Zeit nicht mehr. Dies konnte durch NMR-Analytik verifiziert werden.

Die Temperatur im Verfahren beträgt vorzugsweise 10 bis 150°C, insbesondere 20 bis 110 °C.

Der Druck im Verfahren beträgt vorzugsweise 0,01 MPa (abs.) bis 1 MPa (abs.) insbesondere 0,05 MPa (abs.) bis 0,5 MPa (abs.).

Zur Deaktivierung des basischen Katalysators werden am Ende der Reaktion bevorzugt Neutralisationsmittel eingesetzt.

Beispiele für solche Neutralisationsmittel sind Säuren, beispielsweise Mineralsäuren, wie Salzsäure, Phosphorsäure oder Schwefelsäure; Triorganosilylphosphate, wie Trimethylsilylphosphate; Carbonsäuren, wie n-Octansäure, 2-Ethylhexansäure, n-Nonansäure und Ölsäure; Kohlensäureester wie Propylencarbonat; oder Carbonsäureanhydride wie Octenylbernsteinsäureanhydrid eingesetzt. In einer besonders bevorzugten Ausführungsform werden zur Neutralisation Säuren eingesetzt, deren Salze in den hergestellten Aminosiloxanen bei 20°C löslich sind.

### Beispiele

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### 1. Edukte und Messmethoden:

### 1.1 Alkoxysilane

a) GENIOSIL^{®} GF 93: 3-Aminopropyltriethoxysilan (CAS: 919-30-2) der Wacker Chemie AG, mit einer Reinheit von mind. 97% (AS1).
b) GENIOSIL^{®} GF 96: 3-Aminopropyltrimethoxysilan (CAS: 13822-56-5) der Wacker Chemie AG, mit einer Reinheit von mind. 95% (AS2) .
c) SILAN M1-TRIETHOXY: Methyltriethoxysilan (CAS: 2031-67-6) der Wacker Chemie AG, mit einer Reinheit von mind. 97%.
d) SILAN M1-TRIMETHOXY: Trimethoxymethylsilan (CAS: 1185-55-3) der Wacker Chemie AG, mit einer Reinheit von mind. 97%.
e) SILAN P-TRIETHOXY: Triethoxyphenylsilan (CAS: 780-69-8) der Wacker Chemie AG, mit einer Reinheit von mind. 98%.
f) SILRES^{®} MSE 100: Methoxyfunktionelles Methylpolysiloxanharz der Wacker Chemie AG, mit einer Viskosität von 20 - 35 mm²/s.

### 1.2 Weitere Chemikalien

Trimethoxyphenylsilan (CAS: 2996-92-1), konzentrierte Salzsäure (Säure 1), Isotridecylphosphat (Säure 2), 2-Butyloctansäure (Säure 3), Methanol (HPLC-grade), Ethanol (HPLC-grade), Natriummethylat, Natriumethylat, Kaliumethylat sowie Kaliumhydroxyd wurden von gängigen Zulieferern bezogen. Die in den Beispielen verwendeten Lösungen der Alkalimetallalkoholate sowie von Kaliumhydroxid wurden ausgehend von den Feststoffen unter Verwendung der zuvor genannten reinen Alkohole erzeugt.

### 1.3 Viskosität:

Die Messung der Viskositäten der Materialien im Rahmen der vorliegenden Erfindung erfolgte nach einer Temperierung auf 25 °C mit einem Stabinger Rotationsviskosimeter SVM3000 der Fa. Anton Paar bei 25 °C (Standard).

### 1.4 Gelpermeationschromatographie:

Die massenmittlere Molmasse M_{w} wird dabei ebenso wie die zahlenmittlere Molmasse Mₙ mittels Size Exclusion Chromatography (SEC) gegen Polydimethylsiloxan-Standards, in Toluol, bei 35 °C, Flow Rate 0,7 ml/min und Detektion mit RI (Brechungsindex-Detektor) auf einem Säulenset Meso Pore - Oligo Pore (Agilent, Deutschland) mit einem Injektionsvolumen von 10 µl bestimmt.

### 1.5 NMR-Spektroskopie (²⁹Si- und ¹H-NMR)

### 1.5.1 Mittlere Summenformel:

Die Bestimmung der mittleren Zusammensetzung der Teilhydrolysate gemäß 2 erfolgte mittels ¹H-Kernresonanzspektroskopie (¹H-NMR; Bruker Avance III HD 500 (¹H: 500.2 MHz) Spektrometer mit BBO 500 MHz S2 Probenkopf; 50 mg der jeweiligen Probe in 500 µl CD₂Cl₂). Hierbei werden die Signalintensitäten der Ph-, Me-, MeO- bzw. EtO-Funktionalitäten bestimmt und nach erfolgter Normierung auf die jeweilige Protonenzahl der individuellen Gruppen zueinander ins Verhältnis gesetzt.

### 1.5.2 Evaluation des Äquilibrierungszustandes:

Die Bestimmung des Äquilibrierungszustandes der Aminosiloxane aus den Beispielen 1 - 15 erfolgte mittels ²⁹Si-Kernresonanzspektroskopie (²⁹Si-NMR; Bruker Avance III HD 500 (²⁹Si: 99.4 MHz) Spektrometer mit BBO 500 MHz S2 Probenkopf; inverse gated-Pulssequenz (NS = 3000); 150 mg der jeweiligen Probe in 500 µl CD₂Cl₂). Angegeben wird das Intensitätsverhältnis zwischen dem eingebrachten aminofunktionalisierten Monomer sowie der, während der Äquilibrierungsreaktion entstehenden, Methyl- bzw. Phenylfunktionalisierten Trialkoxysilane. Für gemischte Methoxy-/Ethoxy-Systeme, d.h. Systeme bei dem ein Ethoxy- mit einem Methoxysilan äquilibriert wird, muss der bei der Äquilibrierungsreaktion stattfindende Alkoxygruppenaustausch berücksichtigt werden. Folglich wird das Verhältnis der Summe der jeweilig zusammengehörigen (d.h. durch die Umalkoxylierung entstehende) Einzelkomponenten ermittelt. Am Beispiel der Äquilibrierung vom Methyltrimethoxysilan mit 3-Aminopropyltriethoxysilan würden die Signalintensitäten von H₂N(CH₂)₃Si(OEt)₃, H₂N(CH₂)₃Si(OEt)₂ (OMe) H₂N(CH₂)₃Si(OEt) (OMe)₂, H₂N(CH₂)₃Si(OMe)₃ aufsummiert und durch die Summe der Signalintensitäten der Einzelkomponenten MeSi(OMe)₃, MeSi (OMe)₂(OEt), MeSi(OMe) (OEt)₂ und MeSi(OEt)₃ geteilt werden. Der so erhaltene Wert wird von 1 abgezogen. Das Ergebnis wird in % angegeben.

Um die gemischten Methoxy/Ethoxy-Verbindungen eindeutig im ²⁹Si-NMR identifizieren zu können wurden vorab zwei Referenzexperimente durchgeführt.

### 1.5.3 Identifikation von Me(OEt)₂(OMe)Si sowie Me(OEt) (OMe)₂Si

Im ersten Experiment wurden äquimolare Stoffmengen Methyltriethoxysilan und Methlytrimethoxysilan gemischt. 300 Gew.-ppm einer Natriummethylat-Lösung (30 Gew.-% in Methanol) wurden hinzugegeben und die Mischung für eine Stunde auf 60°C erwärmt. 100 mg dieser Mischung wurden mit 900 mg des Teilhydrolysates aus Beispiel 2 versetzt und ein ²⁹Si NMR Spektrum in CD₂Cl₂ von einer Probe dieser Mischung aufgenommen.

### 1.5.4 Identifikation von RSi(OEt)₂(OMe)Si sowie RSi(OEt) (OMe)₂Si

In weiteren separaten Experimenten wurden äquimolare Stoffmengen der zusammengehörigen Aminotriethoxysilane und Aminotrimethoxysilane (wobei R = H₂N(CH₂)₃- sowie H₂N(CH₂)₂NH(CH₂)₃-) gemischt. 300 Gew.-ppm einer Natriummethylat-Lösung (30 Gew.-% in Methanol) wurden hinzugegeben und die Mischung für eine Stunde auf 60°C erwärmt. 100 mg dieser Mischung wurden mit 900 mg des Teilhydrolysates aus Beispiel 2 versetzt und ein ²⁹Si NMR Spektrum in CD₂Cl₂ von einer Probe dieser Mischung aufgenommen.

### 2. Herstellung von Teilhydrolysaten - Harze A1 - A4

### 2.1 Teilhydrolysat vom Methyltriethoxysilan (Harz A1)

In einem 4L-Dreihalskolben, ausgestattet mit einem KPG-Rührer und einem 500 mL Tropftrichter mit Druckausgleich, werden 2238 g Methyltriethoxysilan vorgelegt. Unter intensivem Rühren werden über den Tropftrichter 266,8 g vollentsalztes Wasser über einen Zeitraum von einer Stunde hinzugetropft. Anschließend wird die Mischung für eine Stunde bei Raumtemperatur gerührt. Über einen Rotationsverdampfer wird das anhaftende Ethanol bei 40°C und 145 mbar destillativ entfernt. Nach einer Filtration durch einen Faltenfilter wird ein klares, farbloses Fluid erhalten. Dieses Produkt ist gemäß der ¹H sowie ²⁹Si-NMR Spektren in CD₂Cl₂ ein Gemisch aus Methyltriethoxysilan sowie weiteren (ethoxyfunktionalisierten) Methylsiloxanen, mit einer mittleren Zusammensetzung von MeSi(OEt)_{0,64}, einer Viskosität von 33,2 mPa*s, einer Dichte von 1,090 g/L sowie einer Polydispersität von 2,43 (Mₙ: 1024 g/mol, M_{w}: 2492 g/mol). Das erhaltene Material wird nachfolgend Harz A1 genannt.

### 2.2. Teilhydrolysat vom Methyltrimethoxysilan (Harz A2)

Als Teilhydrolysat vom Methlytrimethoxysilan wird SILRES^{®} MSE 100 der Wacker Chemie AG verwendet. Das verwendete Material hatte eine Viskosität von 38,7 mPa*s und eine mittlere Zusammensetzung von MeSi(OMe)_{0,84}. Das Material wird nachfolgend Harz A2 genannt.

### 2.3 Teilhydrolysat von Triethoxyphenylsilan (Harz A3)

In einem 2L-Dreihalskolben, ausgestattet mit einem KPG-Rührer und einem 500 mL Tropftrichter mit Druckausgleich, werden 1000 g Triethoxyphenylsilan vorgelegt. Unter intensivem Rühren wird über den Tropftrichter eine Mischung bestehend aus 86,1 g VE-Wasser und 10,1 g konzentrierte Salzsäure über einen Zeitraum von 30 Minuten hinzugetropft. Anschließend wird die Mischung für zwei Stunden bei Raumtemperatur gerührt. Über einen Rotationsverdampfer wird das anhaftende Ethanol bei 60°C und 70 mbar destillativ entfernt. Es wird ein klares, farbloses Fluid erhalten. Dieses Produkt ist gemäß der ¹H sowie ²⁹Si-NMR Spektren ein Gemisch aus ethoxyfunktionalisierten Phenylsiloxanen, mit einer mittleren Zusammensetzung von PhSi(OEt)_{0,58}, einer Viskosität von 1.800 mPa*s sowie einer Polydispersität von 2,68 (Mₙ: 305 g/mol, M_{w}: 815 g/mol). Das erhaltene Material wird nachfolgend Harz A3 genannt.

### 2.4 Teilhydrolysat von Trimethoxyphenylsilan (Harz A4)

In einem 2L-Dreihalskolben, ausgestattet mit einem KPG-Rührer und einem 500 mL Tropftrichter mit Druckausgleich, werden 1.000 g Trimethoxyphenylsilan vorgelegt. Unter intensivem Rühren wird über den Tropftrichter eine Mischung bestehend aus 92,6 g VE-Wasser und 4,0 g konzentrierte Salzsäure über einen Zeitraum von 30 Minuten hinzugetropft. Anschließend wird die Mischung für zwei Stunden bei Raumtemperatur gerührt. Über einen Rotationsverdampfer wird das anhaftende Methanol bei 40°C und 100 mbar destillativ entfernt. Es wird ein klares, farbloses Fluid erhalten. Dieses Produkt ist gemäß der ¹H sowie ²⁹Si-NMR Spektren in CD₂Cl₂ ein Gemisch aus methoxyfunktionalisierten Phenylsiloxanen, mit einer mittleren Zusammensetzung von PhSi(OMe)_{0,97}, einer Viskosität von 377 mPa*s sowie einer Polydispersität von 2,00 (Mₙ: 277 g/mol, M_{w}: 555 g/mol). Das erhaltene Material wird nachfolgend Harz A4 genannt.

### 3. Herstellung von Aminosiloxanen durch Äquilibrierung von Teilhydrolysaten - Allgemeine Synthesevorschrift:

In einem 1L- bzw. 2L-Dreihalskolben, ausgestattet mit einem KPG-Rührer, einem Rückflusskühler mit Blasenzähler, sowie einer Olive mit Argonanschluss, werden zunächst das im jeweiligen Beispiel genannte Harz und das Aminosilan, gemäß den Einwaagen in Tabelle 1 gemischt. Die Reaktionsapparatur wird anschließend mit Argon inertisiert. Im Argon-Gegenstrom wird die Katalysatorlösung (gemäß den Einwaagen in Tabelle 1; Gew.-ppm sind dabei bezogen auf die Gesamtmasse aus Harz und Aminosilan (AS)) hinzugegeben. Je nach Beispiel wird das Material bei einer festgelegten Temperatur äquilibriert (siehe Tabelle 1). Der Katalysator wird durch Zugabe der in Tabelle 1 angegebenen Säure neutralisiert. Bei der Verwendung von konzentrierter Salzsäure werden zum Katalysator äquimolare Stoffmengen zugegeben. Bei Verwendung der Säuren 2 oder 3 wird jeweils die dreifache Säuremenge - bezogen auf die zum verwendeten Katalysator äquimolare Stoffmenge - hinzugegeben. Der bei Verwendung von konzentrierter Salzsäure (Säure 1) ausfallende Feststoff wird durch eine Filtration über einen Faltenfilter unter Nutzung einer Argon-Glocke isoliert. Bei Verwendung der Säuren 2 oder 3 wurde keine Niederschlagsbildung beobachtet und folglich keine Filtration durchgeführt. Die Einwaagen und Synthesebedingungen der Beispiele sind in Tabelle 1 abgebildet. Die analytischen Daten der erhaltenen Produkte sind in Tabelle 2 erfasst.

**Tabelle 1: Zusammenfassung der in den Beispielen verwendeten Edukte, Katalysatoren, Neutralisationsmittel, Synthesebedingungen sowie Ein- und Auswaagen. Die Synthese erfolgte gemäß der allgemeinen Synthesevorschrift in Kapitel 3.**

| Beispiele | Verwendetes Harz; Einwaage [g] | Verwendetes Aminosilan; Einwaage [g] | Verwendeter Katalysator; Einwaage [Gew.-ppm*] | Innentemperatur [°C]; Dauer der Äquilibrierung [Stunden] | Verwendete Säure zur Neutralis. | Ausbeute [%] |
|---|---|---|---|---|---|---|
| Beispiel 1 | Harz A1; 500 | Silan AS1; 500 | NaOMe; 400 | 100; 2 | Säure 1 | 98,7 |
| Beispiel 2 | Harz A1; 1025 | Silan AS1; 475 | NaOMe; 400 | 100; 2 | Säure 1 | 99, 1 |
| Beispiel 3 | Harz A1; 1025 | Silan AS1; 438 | NaOMe; 400 | 100; 2 | Säure 1 | 99, 0 |
| Beispiel 4 | Harz A1; 410 | Silan AS1; 160 | NaOMe; 400 | 100; 2 | Säure 1 | 98, 0 |
| Beispiel 5 | Harz A1; 410 | Silan AS1; 146 | NaOMe; 400 | 100; 2 | Säure 1 | 98,6 |
| Beispiel 6 | Harz A1; 1025 | Silan AS1; 438 | NaOMe; 400 | 50; 5 | Säure 1 | 98, 9 |
| Beispiel 7 | Harz A1; 1025 | Silan AS1; 438 | NaOMe; 400 | 25; 18 | Säure 1 | 98, 8 |
| Beispiel 8 | Harz A1; 550 | Silan AS1; 225 | NaOMe; 400 | 100; 2 | Säure 2 | 100 |
| Beispiel 9 | Harz A1; 550 | Silan AS1; 225 | NaOMe; 400 | 100; 2 | Säure 3 | 100 |
| Beispiel 10 | Harz A1; 550 | Silan AS1; 225 | NaOEt; 700 | 100; 2 | Säure 1 | 98, 8 |
| Beispiel 11 | Harz A1; 550 | Silan AS1; 225 | KOEt; 780 | 100; 2 | Säure 2 | 100 |
| Beispiel 12 | Harz A1; 550 | Silan AS1; 225 | KOH; 650 | 100; 2 | Säure 2 | 100 |
| Beispiel 13 | Harz A2; 1000 | Silan AS1; 500 | NaOMe; 400 | 100; 2 | Säure 1 | 99, 1 |
| Beispiel 14 | Harz A3; 240 | Silan AS1; 103 | NaOMe; 400 | 100; 2 | Säure 1 | 98,6 |
| Beispiel 15 | Harz A4; 342 | Silan AS1; 146 | NaOMe; 400 | 100; 2 | Säure 1 | 98, 9 |
| Beispiel 16 | Harz A2; 50 | Silan AS2;50 | NaOMe; 400 | 100; 2 | Säure 2 | 100 |
| Beispiel 17 | Harz A2; 50 | Silan AS2; 25 | NaOMe; 400 | 100; 2 | Säure 2 | 100 |

| | | | | | | |
|---|---|---|---|---|---|---|
| * Die Angabe Gew.-ppm bezieht sich auf die Einwaage an Katalysatorlösung (30 Gew.-% in Methanol für NaOMe, 29 Gew.-% in Methanol für KOH, 21 Gew.-% in Ethanol für NaOEt sowie 24 Gew.-% in Ethanol für KOEt) bezogen auf die Gesamtmasse aus Harz und Aminosilan. Die Katalysatorlösungen wurden ausgehend von den Feststoffen erzeugt. Die Feststoffe wurden dabei in der Glovebox eingewogen. | | | | | | |

**Tabelle 2: Zusammenfassung der analytischen Ergebnisse der in Tabelle 1 genannten Beispiele.**

| Beispiele | Viskosität [mPa*s] | GPC | | | Äquilibrierungszustand gemäß 1.5.2 [%] |
|---|---|---|---|---|---|
| | | Mₙ[g/mol] | M_{w} [g/mol] | Polydispersität | |
| Beispiel 1 | 6, 9 | 171 | 251 | 1,47 | 64,1 |
| Beispiel 2 | 18,9 | 328 | 386 | 1,18 | 86,0 |
| Beispiel 3 | 23,2 | 290 | 403 | 1,39 | 87,5 |
| Beispiel 4 | 29, 7 | 295 | 422 | 1,43 | 88,5 |
| Beispiel 5 | 38, 0 | 300 | 447 | 1,49 | 90,6 |
| Beispiel 6 | 23,0 | 290 | 403 | 1,39 | 88,7 |
| Beispiel 7 | 23, 1 | 291 | 405 | 1,39 | 89, 5 |
| Beispiel 8 | 38,4 | 270 | 365 | 1, 32 | 87,4 |
| Beispiel 9 | 34, 1 | 299 | 415 | 1,39 | 85,8 |
| Beispiel 10 | 35,4 | 323 | 465 | 1,44 | 88,0 |
| Beispiel 11 | 36,9 | 309 | 444 | 1,44 | 85, 5 |
| Beispiel 12 | 35,7 | 285 | 382 | 1,34 | 87, 4 |
| Beispiel 13 | 14, 1 | 281 | 354 | 1,26 | 87, 9 |
| Beispiel 14 | 79,0 | 568 | 1243 | 2,19 | 60,3 |
| Beispiel 15 | 42, 0 | 374 | 611 | 1, 63 | 94, 0 |
| Beispiel 16 | 6, 3 | 64 | 128 | 1,99 | 54,9 |
| Beispiel 17 | 17,1 | 118 | 270 | 2,29 | 82,4 |

Die Aminosiloxane liegen im Viskositätsbereich von 5 - 100 mPa*s.

Da die Reaktion nur aus einer Äquilibrierung besteht bleibt der Gesamtgehalt an Alkoxygruppen identisch. Eine praktische Konsequenz ist die Tatsache, dass während der Äquilibrierung auch das Methyltrialkoxysilan aus dem Teilhydrolysat freigesetzt wird. Gäbe es keinen bevorzugten Einbau der Aminogruppen, müsste der Äquilibrierungszustand bei 0% liegen, es würden dann äquimolare Teile von Methyltrialkoxysilan und Aminotrialkoxysilan vorliegen. Da die Messewerte aber üblicherweise bei >85% liegen (mit Ausnahme der Beispiele, wo größere Mengen an Aminosilan verwendet werden) demonstriert diese Größe, dass das Aminosilan während der Äquilibrierung bevorzugt eingebaut wird, was hier auch überraschend ist.

## Patentansprüche

1. Verfahren zur Herstellung von Aminosiloxanen, bei dem ein alkoxyreiches Teilhydrolysat von Silanen und Silangemischen, die unabhängig ausgewählt werden aus den allgemeinen Formeln I, Ia, Ib und II
[R¹₃Si(OR²)] (Ia),
[R¹₂Si(OR²)₂] (Ib),
[Si(OR²)₄] (I)
und
[R¹Si(OR²)₃] (II)
mit einem oder mehreren Aminosilanen, die unabhängig ausgewählt werden aus den allgemeinen Formeln IIIa bis Va oder einem Teilhydrolysat davon
[R^{3a}Si(OR⁴)₃] (IIIa),
[R^{3a}₂Si(OR⁴)₂] (IVa)
und
[R^{3a}₃Si(OR⁴)] (Va)
in Gegenwart von
basischem Katalysator umgesetzt wird,
wobei
R¹ einen einwertigen, unsubstituierten oder mit Halogenatomen substituierten C₁-C₂₀-Kohlenwasserstoffrest bedeutet,
R² und R⁴ gleich oder verschieden sein können und ein Wasserstoffatom oder unsubstituierten oder mit Halogenatomen substituierten C₁-C₂₀-Kohlenwasserstoffrest bedeuten,
R^{3a} einen einwertigen C₁-C₂₀-Kohlenwasserstoffrest enthaltend einen oder mehrere basische Stickstoffatome oder einen einwertigen, unsubstituierten oder mit Halogenatomen substituierten C₁-C₂₀-Kohlenwasserstoffrest bedeutet.

2. Verfahren nach Anspruch 1, bei dem
alkoxyreiches Teilhydrolysat von Silanen, die unabhängig ausgewählt werden aus den allgemeinen Formeln I und II
[Si(OR²)₄] (I)
und-
[R¹Si(OR²)₃] (II)
mit einem oder mehreren Aminosilanen, die unabhängig ausgewählt werden aus den allgemeinen Formeln III bis V
[R³Si(OR⁴)₃] (III),
[R³₂Si(OR⁴)₂] (IV)
und
[R³₃Si(OR⁴)] (V)
in Gegenwart von
basischem Katalysator umgesetzt wird,
wobei
R¹ einen einwertigen, unsubstituierten oder mit Halogenatomen substituierten C₁-C₂₀-Kohlenwasserstoffrest bedeutet,
R² und R⁴ gleich oder verschieden sein können und ein Wasserstoffatom oder unsubstituierten oder mit Halogenatomen substituierten C₁-C₂₀-Kohlenwasserstoffrest bedeuten,
R³ einen einwertigen C₁-C₂₀-Kohlenwasserstoffrest enthaltend einen oder mehrere basische Stickstoffatome bedeutet.

3. Verfahren nach Anspruch 1 oder 2, bei dem der Rest R¹ ausgewählt wird aus Methyl- und Phenylrest.

4. Verfahren nach einem oder mehreren der voranstehenden Ansprüche, bei dem der Rest R² ausgewählt wird aus Methyl- und Ethylrest.

5. Verfahren nach einem oder mehreren der voranstehenden Ansprüche, bei dem der Rest R³ ein Rest der allgemeinen Formel VI
-R⁵-[NR⁶-R⁷-]_{g}NR⁸₂ (VI)
ist, wobei R⁵ ein zweiwertiger linearer oder verzweigter Kohlenwasserstoffrest mit 1 bis 18 Kohlenstoffatomen bedeutet,
R⁶ und R⁸ die Bedeutung von R¹ und Wasserstoff haben,
R⁷ ein zweiwertiger Kohlenwasserstoffrest mit 1 bis 6 Kohlenstoffatomen ist und
g 0, 1, 2, 3 oder 4 ist.

6. Verfahren nach Anspruch 4, bei dem der Rest R³ ausgewählt wird aus H₂N(CH₂)₃- und H₂N(CH₂)₂NH(CH₂)₃-.

7. Verfahren nach einem oder mehreren der voranstehenden Ansprüche, bei dem das alkoxyreiche Teilhydrolysat aus mindestens 70 Gew.-% Silan der allgemeinen Formel II hergestellt wird.

8. Verfahren nach einem oder mehreren der voranstehenden Ansprüche, bei dem das Teilhydrolysat eine mittlere Molmasse Mₙ nach GPC von 100 bis 2000 g/mol aufweist.

9. Verfahren nach einem oder mehreren der voranstehenden Ansprüche, bei dem auf 100 Gewichtsteile Teilhydrolysat 10 bis 200 Gewichtsteile Aminosilan eingesetzt werden.

10. Verfahren nach einem oder mehreren der voranstehenden Ansprüche, bei dem der basische Katalysator ausgewählt wird aus Alkali- und Erdalkalihydroxiden, Alkali- und Erdalkalialkoholaten sowie Alkali- und Erdalkalisiloxanolaten.

11. Verfahren nach einem oder mehreren der voranstehenden Ansprüche, bei dem der basische Katalysator ausgewählt wird aus Natriummethanolat, Natriumethanolat, Kaliumhydroxid, Kaliummethylat und Kaliumethylat.

12. Verfahren nach einem oder mehreren der voranstehenden Ansprüche, bei dem am Ende der Reaktion zur Deaktivierung des basischen Katalysators Säure eingesetzt wird.

13. Verfahren nach Anspruch 11, bei dem eine Säure eingesetzt wird, deren Salz in den hergestellten Aminosiloxanen bei 20°C löslich ist.

14. Verfahren nach einem oder mehreren der voranstehenden Ansprüche, bei dem die Reaktion so lange durchgeführt wird, dass sich die Zusammensetzung bei den Reaktionsbedingungen nicht mehr ändert.

## Claims

1. Process for preparing aminosiloxanes, wherein an alkoxy-rich partial hydrolyzate of silanes and silane mixtures independently selected from the general formulae I, Ia, Ib and II
[R¹₃Si(OR²)] (Ia),
[R¹₂Si(OR²)₂] (Ib),
[Si(OR²)₄] (I)
and
[R¹Si(OR²)₃] (II)
is reacted with one or more aminosilanes independently selected from the general formulae IIIa to Va or a partial hydrolyzate thereof
[R^{3a}Si(OR⁴)₃] (IIIa),
[R^{3a}₂Si(OR⁴)₂] (IVa)
and
[R^{3a}₃Si(OR⁴)] (Va)
in the presence of
a basic catalyst,
where
R¹ is a monovalent C₁-C₂₀-hydrocarbon radical which is unsubstituted or substituted by halogen atoms,
R² and R⁴ may be the same or different and are a hydrogen atom or C₁-C₂₀-hydrocarbon radical which is unsubstituted or substituted by halogen atoms,
R^{3a} is a monovalent C₁-C₂₀-hydrocarbon radical comprising one or more basic nitrogen atoms, or a monovalent C₁-C₂₀-hydrocarbon radical which is unsubstituted or substituted by halogen atoms.

2. Process according to Claim 1, wherein
alkoxy-rich partial hydrolyzate of silanes independently selected from the general formulae I and II
[Si(OR²)₄] (I)
and
[R¹Si(OR²)_{3]} (II)
is reacted with one or more aminosilanes independently selected from the general formulae III to V
[R³Si(OR⁴)₃] (III),
[R³₂Si(OR⁴)₂] (IV)
and
[R³₃Si(OR⁴)] (V)
in the presence of
a basic catalyst,
where
R¹ is a monovalent C₁-C₂₀-hydrocarbon radical which is unsubstituted or substituted by halogen atoms,
R² and R⁴ may be the same or different and are a hydrogen atom or C₁-C₂₀-hydrocarbon radical which is unsubstituted or substituted by halogen atoms,
R³ is a monovalent C₁-C₂₀-hydrocarbon radical comprising one or more basic nitrogen atoms.

3. Process according to Claim 1 or 2, wherein the radical R¹ is selected from methyl radical and phenyl radical.

4. Process according to one or more of the preceding claims, wherein the radical R² is selected from methyl radical and ethyl radical.

5. Process according to one or more of the preceding claims, wherein the radical R³ is a radical of the general formula VI
-R⁵-[NR⁶-R⁷-]_{g}NR⁸₂ (VI)
where R⁵ is a divalent linear or branched hydrocarbon radical having 1 to 18 carbon atoms,
R⁶ and R⁸ have the definition of R¹ and hydrogen,
R⁷ is a divalent hydrocarbon radical having 1 to 6 carbon atoms and
g is 0, 1, 2, 3 or 4.

6. Process according to Claim 4, wherein the radical R³ is selected from H₂N(CH₂)₃- and H₂N(CH₂)₂NH(CH₂)₃-.

7. Process according to one or more of the preceding claims, wherein the alkoxy-rich partial hydrolyzate is prepared from at least 70% by weight silane of the general formula II.

8. Process according to one or more of the preceding claims, wherein the partial hydrolyzate has an average molar mass Mₙ according to GPC from 100 to 2000 g/mol.

9. Process according to one or more of the preceding claims, wherein 10 to 200 parts by weight of aminosilane are used per 100 parts by weight of partial hydrolyzate.

10. Process according to one or more of the preceding claims, wherein the basic catalyst is selected from alkali metal hydroxides and alkaline earth metal hydroxides, alkali metal alkoxides and alkaline earth metal alkoxides and alkali metal siloxanolates and alkaline earth metal siloxanolates.

11. Process according to one or more of the preceding claims, wherein the basic catalyst is selected from sodium methoxide, sodium ethoxide, potassium hydroxide, potassium methoxide and potassium ethoxide.

12. Process according to one or more of the preceding claims, wherein acid is used at the end of the reaction to deactivate the basic catalyst.

13. Process according to Claim 11, wherein an acid is used, the salt of which is soluble at 20°C in the aminosiloxanes prepared.

14. Process according to one or more of the preceding claims, wherein the reaction is carried out for so long that the composition no longer changes under the reaction conditions.

## Revendications

1. Procédé pour la préparation d'aminosiloxanes, dans lequel un hydrolysat, partiel, riche en alcoxy, de silanes et de mélanges de silanes, qui sont choisis indépendamment parmi les formules générales I, Ia, Ib et II
[R¹₃Si(OR²)] (Ia),
[R¹₂Si(OR²)₂] (Ib),
[Si(OR²)₄] (I)
et
[R¹Si(OR²)₃] (II)
est transformé avec un ou plusieurs aminosilanes, qui sont choisis indépendamment parmi les formules générales IIIa à Va ou un hydrolysat partiel de ceux-ci
[R^{3a}Si(OR⁴)₃] (IIIa),
[R^{3a}₂Si(OR⁴)₂] (IVa)
et
[R^{3a}₃Si(OR⁴)] (Va)
en présence d'un catalyseur basique,
R¹ signifiant un radical hydrocarboné monovalent en C₁-C₂₀, non substitué ou substitué par des atomes d'halogène,
R² et R⁴ pouvant être identiques ou différents et signifiant un atome d'hydrogène ou un radical hydrocarboné en C₁-C₂₀ non substitué ou substitué par des atomes d'halogène
R^{3a} signifiant un radical hydrocarboné monovalent en C₁-C₂₀ contenant un ou plusieurs atomes basiques d'azote ou un radical hydrocarboné monovalent en C₁-C₂₀ non substitué ou substitué par des atomes d'halogène.

2. Procédé selon la revendication 1, dans lequel l'hydrolysat partiel, riche en alcoxy, de silanes, qui sont choisis indépendamment parmi les formules générales I et II
[Si(OR²)₄] (I)
et
[R¹Si(OR²)₃] (II)
est transformé avec un ou plusieurs aminosilanes, qui sont choisis indépendamment parmi les formules générales III à V
[R³Si(OR⁴)₃] (III),
[R³₂Si(OR⁴)₂] (IV)
et
[R³₃Si(OR⁴)] (V)
en présence d'un catalyseur basique,
R¹ signifiant un radical hydrocarboné monovalent en C₁-C₂₀, non substitué ou substitué par des atomes d'halogène,
R² et R⁴ pouvant être identiques ou différents et signifiant un atome d'hydrogène ou un radical hydrocarboné en C₁-C₂₀ non substitué ou substitué par des atomes d'halogène,
R³ signifiant un radical hydrocarboné monovalent en C₁-C₂₀ contenant un ou plusieurs atomes basiques d'azote.

3. Procédé selon la revendication 1 ou 2, dans lequel le radical R¹ est choisi parmi le radical méthyle et le radical phényle.

4. Procédé selon l'une ou plusieurs des revendications précédentes, dans lequel le radical R² est choisi parmi le radical méthyle et le radical éthyle.

5. Procédé selon l'une ou plusieurs des revendications précédentes, dans lequel le radical R³ est un radical de formule générale VI
-R⁵-[NR⁶-R⁷-]_{g}NR⁸₂ (VI)
dans laquelle R⁵ représente un radical hydrocarboné bivalent, linéaire ou ramifié, comprenant 1 à 18 atomes de carbone,
R⁶ et R⁸ présentent la signification de R¹ et d'hydrogène,
R⁷ représente un radical hydrocarboné bivalent comprenant 1 à 6 atomes de carbone et
g vaut 0, 1, 2, 3 ou 4.

6. Procédé selon la revendication 4, dans lequel le radical R³ est choisi parmi H₂N(CH₂)₃- et H₂N(CH₂)₂NH(CH₂)₃-.

7. Procédé selon l'une ou plusieurs des revendications précédentes, dans lequel l'hydrolysat partiel, riche en alcoxy, est préparé à partir d'au moins 70% en poids de silane de la formule générale II.

8. Procédé selon l'une ou plusieurs des revendications précédentes, dans lequel l'hydrolysat partiel présente une masse molaire moyenne Mₙ selon la CPG de 100 à 2000 g/mole.

9. Procédé selon l'une ou plusieurs des revendications précédentes, dans lequel on utilise, pour 100 parties en poids d'hydrolysat partiel, 10 à 200 parties en poids d'aminosilane.

10. Procédé selon l'une ou plusieurs des revendications précédentes, dans lequel le catalyseur basique est choisi parmi les hydroxydes de métal alcalin et alcalino-terreux, les alcoolates de métal alcalin et alcalino-terreux ainsi que les siloxanolates de métal alcalin et alcalino-terreux.

11. Procédé selon l'une ou plusieurs des revendications précédentes, dans lequel le catalyseur basique est choisi parmi le méthanolate de sodium, l'éthanolate de sodium, l'hydroxyde de potassium, le méthylate de potassium et l'éthylate de potassium.

12. Procédé selon l'une ou plusieurs des revendications précédentes, dans lequel, à la fin de la réaction, un acide est utilisé pour la désactivation du catalyseur basique.

13. Procédé selon la revendication 11, dans lequel on utilise un acide dont le sel est soluble à 20°C dans les aminosiloxanes préparés.

14. Procédé selon l'une ou plusieurs des revendications précédentes, dans lequel la réaction est réalisée jusqu'à ce que la composition ne se modifie plus dans les conditions de réaction.
